# EUROPÄISCHE PATENTSCHRIFT

(11) **EP 3 638 499 B1**
(45) Veröffentlichungstag und Bekanntmachung des Hinweises auf die Patenterteilung: **17.02.2021**
(21) Anmeldenummer: 18731803.5
(22) Anmeldetag: 13.06.2018
(51) Int. Cl.: B30B 3/04, F16H 3/085, B21B 35/14, B21B 35/04

(54) **SCHALTGETRIEBE IN DER WALZWERKSTECHNIK**
SHIFTABLE TRANSMISSION IN ROLLING MILL TECHNOLOGY
BOÎTE D'ENGRENAGES À CHANGEMENT DE RAPPORT DANS LE DOMAINE DES LAMINOIRS

(30) Priorität: 14.06.2017 DE 102017210083
(43) Veröffentlichungstag der Anmeldung: 22.04.2020
(73) Patentinhaber: SMS Group GmbH, 40237 Düsseldorf (DE)
(72) Erfinder: KRÜGER, Matthias, 57271 Hilchenbach (DE); MÖLLERING, Frank, 57223 Kreuztal (DE); CATIC, Natalie, 57271 Hilchenbach (DE)
(74) Vertreter: Klüppel, Walter
(86) Internationale Anmeldenummer: PCT/EP2018/065702
(87) Internationale Veröffentlichungsnummer: WO 2018/229150

(56) Entgegenhaltungen:
- EP-A2- 0 933 145
- WO-A1-2013/174116
- BE-A- 476 834
- CN-B- 102 305 272
- FR-E- 87 189
- JP-A- S 542 249
- JP-A- 56 160 814
- JP-U- S5 843 808
- JP-U- S6 187 603

## Beschreibung

### Technisches Gebiet

Die Erfindung betrifft ein Schaltgetriebe, insbesondere ein Stirnradkammwalzenschaltgetriebe, mit mindestens zwei Schaltstufen, das eine drehbar gelagerte Antriebswelle, und eine drehbar gelagerte erste Abtriebswelle und eine drehbar gelagerte zweite Abtriebswelle aufweist, die parallel angeordnet und über eine Abtriebsgetriebestufe so miteinander verbunden sind, dass sie sich in jeder Schaltstufe des Schaltgetriebes bei einem an die Antriebswelle angelegten Eingangsdrehmoment gegensinnig drehen. Das Schaltgetriebe ist vorzugsweise als Teil des Antriebs von Walzen, etwa Arbeits-, Zwischen- und/oder Stützwalzen in der Walzwerkstechnik anwendbar.

### Hintergrund der Erfindung

In der Walzwerkstechnik werden in Gerüsthauptantrieben Getriebe mit einer Stirnradschaltstufe und einer Kammwalzenstufe eingesetzt. Die Stirnradschaltstufe dient zur Änderung der Abtriebsdrehzahl (bzw. des Abtriebsmoments) relativ zur Antriebsdrehzahl (bzw. zum Antriebsmoment). Über die Kammwalzenstufe werden etwa eine damit verbundene Oberwalze und Unterwalze mit gleicher Drehzahl gegensinnig angetrieben.

So beschreibt beispielsweise die DE 42 19 399 A1 einen Walzenantrieb für Maschinenwalzen, der ein Schaltgetriebe zwischen einer Antriebswelle und anzutreibenden Druckwalzen aufweist.

Grundsätzlich erzeugt jeder Zahneingriff innerhalb eines Getriebes eine Schwingungsanregung im Antriebsstrang mit der Zahneingriffsfrequenz der im Eingriff befindlichen Stufe und ihren Harmonischen. Derartige Anregungen aus dem Antriebsstrang können insbesondere bei schnelllaufenden Walzanlagen, etwa Kaltwalzanlagen, Eigenschwingungsformen des Walzgerüsts oder des Walzensatzes anregen (beispielsweise gemäß dem sogenannten "5th-Octave Chatter"), wodurch die Produktqualität erheblich beeinträchtigt werden kann. Zur Vermeidung kritischer Schwingungsanregungen ist häufig eine Begrenzung der Produktionsgeschwindigkeit notwendig. An derartigen drehzahlproportionalen Anregungen ist insbesondere die Verzahnung der Über- oder Untersetzungsstufe ursächlich beteiligt, da diese im Vergleich zur Kammwalzenstufe eine höhere Momentenbelastung aufweist. Bei der herkömmlichen Bauart von Stirnradkammwalzengetrieben tritt dieses Problem auch dann für alle Schaltstufen auf, wenn eine Schaltstufe mit einer Übersetzung im Bereich von oder gleich Eins konzipiert ist. Ferner können sich die vergleichsweise großen Massenträgheiten der Getrieberäder nachteilig auf das dynamische Verhalten und Schwingungsverhalten des Antriebsstrangs auswirken, wodurch sich Probleme bei der Optimierung der Drehzahlregelung ergeben können.

Die JP S54 2249 A, CN 102305272 B und JP S56 160814 A beschreiben jeweils einen Antrieb mit Getriebe für ein Walzwerk.

Dokument BE476834 A offenbart eine Schaltgetriebe gemäss dem Oberbegriff des Anspruchs 1.

### Darstellung der Erfindung

Eine Aufgabe der Erfindung besteht darin, ein Schaltgetriebe, insbesondere zur Verwendung in der Walzwerkstechnik, anzugeben, das ein verbessertes Schwingungsverhalten aufweist und somit vorzugsweise Produktivitätseinbußen und Qualitätseinbußen verringern kann.

Gelöst wird die Aufgabe mit einem Schaltgetriebe mit den Merkmalen des Anspruchs 1. Vorteilhafte Weiterbildungen folgen aus den Unteransprüchen, der folgenden Darstellung der Erfindung sowie der Beschreibung bevorzugter Ausführungsbeispiele.

Das Schaltgetriebe, das zumindest zwei Schaltstufen aufweist, eignet sich besonders zum Einsatz in der Walzwerkstechnik, es ist vorzugsweise anwendbar als Teil des Hauptantriebs von Walzen, etwa Arbeits-, Zwischen und/oder Stützwalzen beim Kaltwalzen von bandförmigen Produkten, etwa Metallbändern aus Stahl oder Nichteisenmetallen, den sogenannten NE-Metallen.

Das Schaltgetriebe weist eine drehbar gelagerte Antriebswelle auf, an die ein Eingangsdrehmoment anlegbar ist. Die Antriebswelle kann beispielsweise von einem Elektromotor angetrieben, d.h. in Drehung versetzt werden. Ferner weist das Schaltgetriebe eine drehbar gelagerte erste Abtriebswelle und eine drehbar gelagerte zweite Abtriebswelle auf, die entlang ihrer Axialrichtungen parallel angeordnet und über eine Abtriebsgetriebestufe so miteinander verbunden sind, dass sie sich in jeder Schaltstufe des Schaltgetriebes bei einem an die Antriebswelle angelegten Eingangsdrehmoment gegensinnig, vorzugsweise mit derselben Drehzahl, drehen. Das Schaltgetriebe weist ferner eine erste Kupplung auf, die eingerichtet ist, um die Antriebswelle und die erste Abtriebswelle auf eine schaltbare Weise miteinander zu verbinden bzw. zu trennen, wobei im gekuppelten Zustand der ersten Kupplung eine erste Schaltstufe des Schaltgetriebes realisiert ist, in der die Antriebswelle und die erste Abtriebswelle so miteinander verbunden sind, dass das Eingangsdrehmoment ohne Über- oder Untersetzung auf die erste Abtriebswelle übertragen wird. In anderen Worten: Im gekuppelten Zustand der ersten Kupplung wird das Eingangsdrehmoment von der Antriebswelle ohne Verzahnung, in der Übersetzung Eins direkt und ohne Umleitung auf die erste Abtriebswelle übertragen. Vorzugsweise sind zu diesem Zweck die Antriebswelle und die erste Abtriebswelle im gekuppelten Zustand der ersten Kupplung auf eine starre Weise verbunden.

Bevor die technischen Wirkungen des Schaltgetriebes dargelegt werden, sei darauf hingewiesen, dass die Bezeichnungen "erste" und "zweite" lediglich der sprachlichen Unterscheidung der betreffenden Komponenten dienen, sie sind insofern als Teil der Bezeichnungen zu verstehen, sie implizieren jedoch keine Ordnung, Abhängigkeiten oder dergleichen. Wenn ferner von einer "Verbindung" von drehbar gelagerten Getriebekomponenten, etwa der Antriebswelle und der ersten Abtriebswelle, die Rede ist, dann kann eine mechanisch starre Verbindung vorliegen, wichtig jedoch ist, dass eine Drehmomentübertragung gewährleistet ist.

Indem im gekuppelten Zustand der ersten Kupplung eine erste Schaltstufe des Schaltgetriebes realisiert ist, werden Schwingungsanregungen des Schaltgetriebes, resultierend aus einer etwaigen Getriebeverzahnung, eliminiert, da die Antriebswelle und die erste Abtriebswelle über die erste Kupplung, ohne Verzahnung miteinander verbunden sind. In der ersten Schaltstufe des Schaltgetriebes entfällt somit eine Übersetzungsstufe mit Verzahnung. Damit geht ein günstigeres dynamisches Verhalten des Antriebsstrangs in der ersten Schaltstufe einher, da träge Massen, wie etwa Stirnräder herkömmlicher Schaltstufen, entfallen. Ferner ist das Schaltgetriebe dadurch kostengünstig, kompakt und wartungsarm.

Vorzugsweise sind die Antriebswelle und die erste Abtriebswelle axial hintereinander entlang derselben Drehachse gelagert, wodurch eine kompakte Bauweise realisierbar ist. Die Antriebswelle und die erste Abtriebswelle sind in diesem Fall gentrennte Bauteile, die jedoch technisch so verbunden sind, dass sie wie eine einzelne Welle wirken. Die erste Kupplung kann im gekuppelten Zustand mit einem besonders einfachen Aufbau eine zuverlässige und starre Verbindung realisieren.

Vorzugsweise weist die Abtriebsgetriebestufe eine erste Kammwalze, die fest mit der ersten Abtriebswelle verbunden ist, und eine zweite Kammwalze auf, die fest mit der zweiten Abtriebswelle verbunden ist und mit der ersten Kammwalze im Zahneingriff steht, wobei die erste Kammwalze und die zweite Kammwalze denselben Durchmesser aufweisen. Wenn das Schaltgetriebe auf diese Weise als Kammwalzengetriebe ausgeführt ist, stehen schrägverzahnte Ritzel mit mehreren Zähnen gleichzeitig im Eingriff, wodurch eine schwingungsarme und gleichmäßige Drehmomentübertragung gewährleistet ist. Es sei darauf hingewiesen, dass die oben genannte "feste" Verbindung eine integrale und einstückige Ausbildung umfasst. Die beiden Kammwalzen weisen denselben Durchmesser auf, um eine identische Drehzahl bei entgegengesetzter Drehrichtung zu realisieren. Ein solcher Aufbau ist insbesondere beim Antrieb eines Walzenpaares anwendbar.

Vorzugsweise ist die erste Kupplung eine formschlüssige Kupplung, die gemäß einer besonderen Ausführungsform eine zur ersten Abtriebswelle konzentrisch angeordnete erste Schalthülse aufweist, die zur Schaltung der ersten Kupplung axial verschiebbar ist. Auf diese Weise wird das Kuppeln und Trennen der Antriebswelle und der ersten Abtriebswelle auf technisch einfache und sichere Weise realisiert, indem zur Betätigung der ersten Kupplung die erste Schalthülse axial verschoben, d.h. eingerückt bzw. ausgerückt wird.

Vorzugsweise weist das Schaltgetriebe eine Antriebsgetriebestufe auf, die in einer zweiten Schaltstufe eine Über- oder Untersetzung, vorzugsweise Untersetzung, zwischen der Antriebswelle und der zweiten Abtriebswelle realisiert. Vorzugsweise wird die erste Schaltstufe mit einer Übersetzung von ungefähr oder gleich Eins für hohe Walzgeschwindigkeiten, bei denen die Problematik der Schwingungsanregung besonders relevant ist, angewendet. Niedrige Walzgeschwindigkeiten, bei denen die Anlage insgesamt weniger schwingungsanfällig ist, werden dagegen vorzugsweise in der zweiten Schaltstufe mit einer Geschwindigkeitsuntersetzung gefahren.

Vorzugsweise weist die Antriebsgetriebestufe ein erstes Stirnrad, das fest mit der Antriebswelle verbunden ist, und ein zweites Stirnrad auf, das mit dem ersten Stirnrad im Zahneingriff steht und so mit der zweiten Abtriebswelle verbindbar ist, dass in der zweiten Schaltstufe das Eingangsdrehmoment von der Antriebswelle durch die beiden Stirnräder umgesetzt und auf die zweite Abtriebswelle übertragen wird, wobei der Durchmesser des ersten Stirnrads aus dem oben genannten Grund vorzugsweise kleiner als der des zweiten Stirnrads ist. Auf diese Weise wird die zweite Schaltstufe auf mechanisch einfache und zuverlässige Weise realisiert. Das Schaltgetriebe ist besonders bevorzugt als Stirnradkammwalzenschaltgetriebe ausgeführt. Es sei darauf hingewiesen, dass auch in diesem Fall die oben genannte "feste" Verbindung eine integrale und einstückige Ausbildung umfasst.

Vorzugsweise weist die Antriebsgetriebestufe eine zweite Kupplung auf, die eingerichtet ist, um die Antriebswelle und die zweite Abtriebswelle auf eine schaltbare Weise miteinander zu verbinden bzw. zu trennen, wobei im gekuppelten Zustand der zweiten Kupplung die zweite Schaltstufe des Schaltgetriebes realisiert ist. Vorzugsweise wirkt die zweite Kupplung zwischen der zweiten Abtriebswelle und dem zweiten Stirnrad. Durch die starre Kopplung zwischen der Antriebs- und Abtriebswelle in der ersten Schaltstufe wird ein zweites Stirnradpaar eingespart, wodurch aufgrund der eingesparten Massenträgheitsmomente ein besonders günstiges dynamisches Verhalten des Antriebsstrangs erzielt wird.

Vorzugsweise ist die zweite Kupplung eine formschlüssige Kupplung, die gemäß einer besonderen Ausführungsform, analog zum Fall der ersten Kupplung, eine zur zweiten Abtriebswelle konzentrisch angeordnete zweite Schalthülse aufweist, die zur Schaltung der zweiten Kupplung axial verschiebbar ist. Auf diese Weise wird das Kuppeln und Trennen der Antriebswelle bzw. des zweiten Stirnrads von der zweiten Abtriebswelle auf technisch einfache und sichere Weise realisiert, indem zur Betätigung der zweiten Kupplung die zweite Schalthülse axial verschoben, d.h. eingerückt bzw. ausgerückt wird.

Vorzugsweise sind die erste Kupplung und die zweite Kupplung so miteinander gekoppelt - elektronisch, mechanisch oder auf andere Weise -, dass sie stets gemeinsam und gegensinnig geschaltet werden. Gemäß einer besonders bevorzugten Ausführungsform sind die erste Kupplung und die zweite Kupplung mechanisch miteinander gekoppelt, etwa über einen Hebelmechanismus. Eine mechanische Kopplung der beiden Kupplungen, die beim Schaltvorgang synchron zu betätigen sind, sorgt für eine systeminhärente Sicherheit des Schaltgetriebes. Das dargelegte Schaltgetriebe ist in erster Linie zur Verwendung in der Walzwerkstechnik, insbesondere für das Kaltwalzen von metallischen Bändern, ausgelegt, in der Schwingungen, die vom Antrieb der Walzen ausgehen, die Produktqualität erheblich beeinträchtigen können. Doch das Schaltgetriebe kann auch in anderen Bereichen angewendet werden.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale realisiert werden, insofern sich die Merkmale nicht widersprechen. Die folgende Beschreibung der bevorzugten Ausführungsbeispiele erfolgt mit Bezug auf die begleitenden Zeichnungen.

### Kurze Beschreibung der Figuren

Die Figur 1 zeigt schematisch ein Stirnradkammwalzengetriebe im Zustand einer ersten Schaltstufe.

Die Figur 2 zeigt schematisch ein Stirnradkammwalzengetriebe im Zustand einer zweiten Schaltstufe.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente mit identischen Bezugszeichen versehen, und auf eine wiederholende Beschreibung dieser Elemente wird teilweise verzichtet, um Redundanzen zu vermeiden.

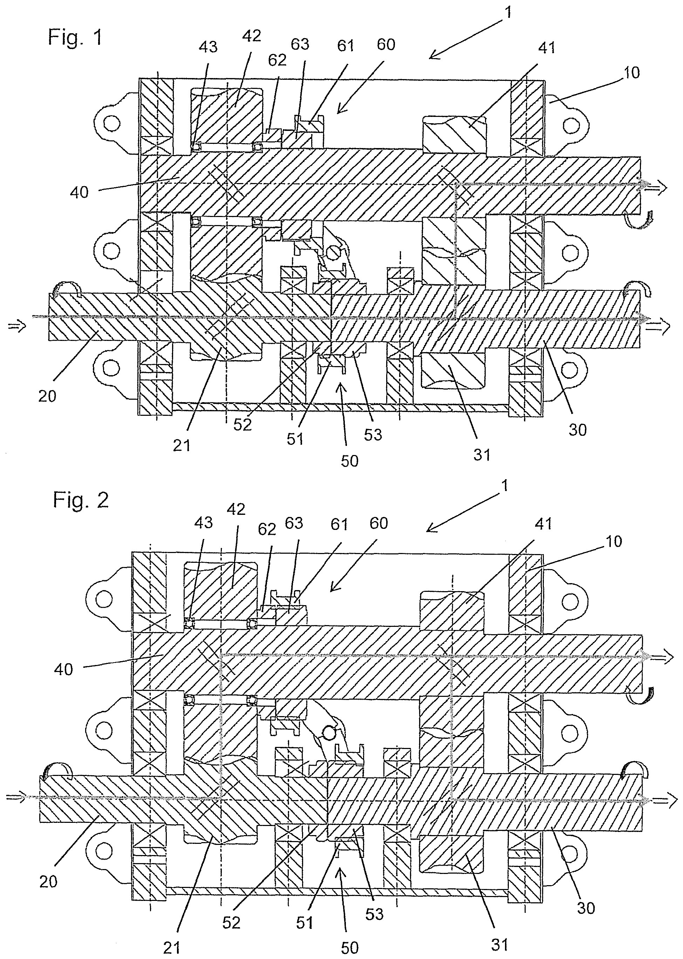

Die Figuren 1 und 2 zeigen ein Schaltgetriebe 1, beispielhaft als Stirnradkammwalzengetriebe ausgeführt, in zwei unterschiedlichen Schaltzuständen.

Das Schaltgetriebe 1 weist ein Gehäuse 10 auf, in dem eine Antriebswelle 20, eine erste Abtriebswelle 30 und eine zweite Abtriebswelle 40 drehbar gelagert sind. Die Drehlager sind in den Figuren 1 und 2 gezeigt, tragen der Übersichtlichkeit halber jedoch keine Bezugszeichen. Die Antriebswelle 20, die erste Abtriebswelle 30 und die zweite Abtriebswelle 40 sind im vorliegenden Beispiel parallel angeordnet, wobei die Antriebswelle 20 und die erste Abtriebswelle 30 axial hintereinander liegen und über eine erste Kupplung 50 starr miteinander verbindbar und lösbar sind. Die Antriebswelle 20 kann beispielsweise über einen nicht gezeigten Elektromotor in Drehung versetzt werden. Das Drehmoment der Antriebswelle 20 wird im Schaltgetriebe 1 gegebenenfalls umgewandelt, wie es weiter unten im Detail beschrieben ist, und an die beiden Abtriebswellen 30 und 40 übertragen.

Im gekuppelten Zustand der ersten Kupplung 50 sind die Antriebswelle 20 und die erste Abtriebswelle 30 ohne eine Verzahnung, starr miteinander verbunden. Vorzugsweise führt die erste Kupplung 50 eine formschlüssige Verbindung der beiden Wellen durch. Im vorliegenden Ausführungsbeispiel ist dazu eine erste zylindrische Schalthülse 51 vorgesehen, die konzentrisch zur Antriebswelle 20 und ersten Abtriebswelle 30 angeordnet und in axialer Richtung verschiebbar ist. Im gekuppelten Zustand steht die erste Schalthülse 51 gleichzeitig mit der Antriebswelle 20 und der ersten Abtriebswelle 30 im Eingriff, wodurch die beiden Wellen 20 und 30 formschlüssig verbunden sind. Der Eingriff kann direkt erfolgen, oder die erste Schalthülse 51 kann, wie im gezeigten Ausführungsbeispiel, über erste Kupplungsgegenstücke 52 und 53, die entsprechend mit der Antriebswelle 20 und der ersten Abtriebswelle 30 fest verbunden sind, geschoben werden. Durch eine axiale Verschiebung der ersten Schalthülse 51, so dass zumindest eine der beiden Wellen 20 bzw. 30 mit dieser nicht mehr im Eingriff steht, werden die erste Kupplung 50 gelöst und die beiden Wellen 20 und 30 getrennt, wodurch sie unabhängig voneinander drehbar sind. Die Betätigung der ersten Schalthülse 51 kann elektrisch, pneumatisch oder auf andere Weise erfolgen. Es sei darauf hingewiesen, dass die erste Kupplung 50 auch auf technisch andere Weise realisiert werden kann, beispielsweise kann die starre Verbindung der Antriebswelle 20 und der ersten Abtriebswelle 30 kraftschlüssig erfolgen.

Die Figur 1 zeigt einen Zustand, in dem die erste Kupplung 50 betätigt ist, so dass die Antriebswelle 20 und die erste Abtriebswelle 30 starr miteinander verbunden sind. Das Eingangsdrehmoment von der Antriebswelle 20 wird somit eins-zu-eins auf die erste Abtriebswelle 30 übertragen.

Eine erste Kammwalze 31 ist mit der ersten Abtriebswelle 30 fest verbunden, etwa einstückig mit dieser ausgebildet. Die erste Kammwalze 31 steht mit einer zweiten Kammwalze 41, die wiederum fest mit der zweiten Abtriebswelle 40 verbunden ist, etwa einstückig mit dieser ausgebildet ist, im Zahneingriff. Die beiden Kammwalzen 31 und 41 weisen vorzugsweise denselben Durchmesser auf, so dass bei einem angelegten Eingangsdrehmoment die beiden Abtriebswellen 30 und 40 mit derselben Drehzahl gegensinnig angetrieben werden. Die beiden Kammwalzen 31 und 41 bilden in der vorliegenden Ausführungsform die oben genannte Abtriebsgetriebestufe aus. Anstelle der Kammwalzen 31 und 41 können auch andere Getriebeelemente, vorzugsweise geeignete Formen von Zahnrädern, angewendet werden, solange gewährleistet ist, dass bei einem an die Antriebswelle 20 angelegten Eingangsdrehmoment die beiden Abtriebswellen 30 und 40 mit einem bestimmten Drehzahlverhältnis, vorzugsweise mit derselben Drehzahl, gegensinnig angetrieben werden.

Im gekuppelten Zustand der Figur 1 (erste Schaltstufe) erfolgt die Drehmomentübertragung, wie es durch Pfeile in der Figur dargestellt ist, d.h. das Eingangsdrehmoment wird durch die starre Verbindung der Antriebswelle 20 und der ersten Abtriebswelle 30 direkt und ohne Umleitung auf die erste Kammwalze 31 übertragen, die wiederum die zweite Kammwalze 41 und damit die zweite Abtriebswelle 40 gegensinnig antreibt. Um diesen Kraftweg zu erzielen, ist es nötig, dass eine zweite Schaltstufe, die in Figur 2 gezeigt ist und im Folgenden beschrieben wird, entkoppelt ist.

Im Zustand der Figur 2 sind die Antriebswelle 20 und die erste Abtriebswelle 30 entkoppelt, d.h. die erste Kupplung 50 ist ausgerückt. Ein erstes Stirnrad 21, das mit der Antriebswelle 20 fest verbunden, etwa einstückig mit dieser ausgebildet ist, steht mit einem zweiten Stirnrad 42 im Zahneingriff. Das zweite Stirnrad 42 ist mit der zweiten Abtriebswelle 40 so verbindbar, dass eine Drehung des zweiten Stirnrads 42 die zweite Abtriebswelle 40 antreiben kann. Zwischen dem zweiten Stirnrad 42 und der zweiten Abtriebswelle 40 ist eine Lagerung 43 vorgesehen, die so ausgelegt ist, dass in der ersten Schaltstufe der Figur 1, d.h. bei einer Kraftübertragung von der ersten Kammwalze 31 auf die zweite Kammwalze 41, das zweite Stirnrad 42 sich drehmomentlos mitdreht.

Zwischen dem zweiten Stirnrad 42 und der der zweiten Abtriebswelle 40 wirkt eine zweite Kupplung 60, die wie bei der ersten Kupplung 50 mittels einer axial verschiebbaren zylindrischen zweiten Schalthülse 61 geschaltet werden kann. Im gekuppelten Zustand der zweiten Kupplung 60 sind die zweite Abtriebswelle 40 und das zweite Stirnrad 42 starr miteinander verbunden. Vorzugsweise führt auch die zweite Kupplung 60 eine formschlüssige Verbindung durch. Im vorliegenden Ausführungsbeispiel ist dazu die zweite zylindrische Schalthülse 61 vorgesehen, die konzentrisch zur zweiten Abtriebswelle 40 angeordnet und in axialer Richtung verschiebbar ist. Im gekuppelten Zustand steht die zweite Schalthülse 61 gleichzeitig mit der zweiten Abtriebswelle 40 und dem zweiten Stirnrad 42 im Eingriff, wodurch die beiden Elemente formschlüssig verbunden sind. Der Eingriff kann direkt erfolgen, oder die zweite Schalthülse 61 kann, wie im gezeigten Ausführungsbeispiel, über zweite Kupplungsgegenstücke 62 und 63, die entsprechend mit dem zweiten Stirnrad 42 und der zweiten Abtriebswelle 40 fest verbunden sind, geschoben werden. Durch ein axiales Ausrücken der Schalthülse 61 wird die zweite Kupplung 60 gelöst, das zweite Stirnrad 42 und die zweite Abtriebswelle 40 werden getrennt, wodurch sie unabhängig voneinander drehbar sind. Wie im Fall der ersten Kupplung 50 kann die Betätigung der zweiten Schalthülse 61 elektrisch, pneumatisch oder auf andere Weise erfolgen. Es sei darauf hingewiesen, dass auch die zweite Kupplung 60 auf technisch andere Weise realisiert werden kann, beispielsweise kann die Verbindung kraftschlüssig erfolgen.

Im gekuppelten Zustand der Figur 2 (zweite Schaltstufe) erfolgt die Drehmomentübertragung, wie es durch Pfeile in der Figur dargestellt ist, d.h. das Eingangsdrehmoment von der Antriebswelle 20 wird vom ersten Stirnrad 21 auf das zweite Stirnrad 42 übertragen. Das erste Stirnrad 21 ist vorzugsweise kleiner als das zweite Stirnrad 42, um in dieser zweiten Schaltstufe eine Untersetzung zu realisieren. Gleichzeitig ist die zweite Kupplung 60 betätigt, so dass das Drehmoment vom zweiten Stirnrad 42 auf die zweite Abtriebswelle 40 übertragen wird. Diese wiederum überträgt das Drehmoment über die beiden Kammwalzen 41 und 31 auf die erste Abtriebswelle 30, die durch die nicht geschaltete erste Kupplung 50 mechanisch von der Antriebswelle 20 getrennt ist.

Gemäß dem oben dargelegten Aufbau realisiert die erste Schaltstufe, die der Figur 1, eine feststehende Übersetzung vom Betrag Eins (keine Über- oder Untersetzung) zwischen Getriebeantrieb und -abtrieb. In dieser ersten Schaltstufe entfällt eine Verzahnung; ein technischer Beitrag, der durch die erste Kupplung 50 ermöglicht wird. Die schaltbare erste Kupplung 50 verbindet in der ersten Schaltstufe die Antriebswelle 20 und die erste Abtriebswelle 30 auf eine starre Weise ohne Verzahnung. Ist die zweite Schaltstufe, die der Figur 2, mit einer Übersetzung bzw. Untersetzung ungleich Eins geschaltet, sind die Antriebswelle 20 und die erste Abtriebswelle 30 getrennt, so dass dann eine Übersetzungsstufe mit Verzahnung über die Stirnräder 21 und 42 im Eingriff ist. Zu diesem Zweck sind die beiden Kupplungen 50 und 60 - <ein>/<aus> ↔ <aus>/<ein> - gegensinnig synchron zu schalten. Vorzugsweise sind die beiden Kupplungen 50 und 60 mechanisch gekoppelt.

Das Schaltgetriebe 1 ist vorzugsweise für sogenannte Gerüsthauptantriebe ausgelegt. So wird die erste Schaltstufe mit einer Übersetzung von ungefähr oder gleich Eins etwa für hohe Walzgeschwindigkeiten verwendet, bei denen die Problematik der Schwingungsanregung besonders relevant ist. Niedrige Walzgeschwindigkeiten, bei denen die Anlage insgesamt weniger schwingungsanfällig ist, werden dagegen in der zweiten Schaltstufe mit einer Geschwindigkeitsuntersetzung gefahren.

Das dargelegte Schaltgetriebe 1, das vorzugsweise als Stirnradkammwalzenschaltgetriebe aufgebaut ist, ermöglicht eine deutliche Reduzierung der Schwingungsanregung des Walzgerüsts aus dem Antriebsstrang, indem die Stirnradstufe in der ersten Schaltstufe entfällt. Damit geht ferner ein günstigeres dynamisches Verhalten des Antriebsstrangs in der ersten Schaltstufe einher, da träge Massen, wie etwa Stirnräder einer kompletten Schaltstufe, entfallen. Eine mechanische Kopplung der beiden Kupplungen 50 und 60, die beim Schaltvorgang synchron zu betätigen sind, sorgt für eine systeminhärente Sicherheit des Schaltgetriebes 1. Ferner ist durch den Wegfall einer Stirnradstufe das Schaltgetriebe 1 kostengünstig, kompakt und wartungsarm.

### Bezugszeichenliste

- 1: Schaltgetriebe
- 10: Gehäuse
- 20: Antriebswelle
- 21: Erstes Stirnrad
- 30: Erste Abtriebswelle
- 31: Erste Kammwalze
- 40: Zweite Abtriebswelle
- 41: Zweite Kammwalze
- 42: Zweites Stirnrad
- 43: Lagerung
- 50: Erste Kupplung
- 51: Erste Schalthülse
- 52, 53: Erste Kupplungsgegenstücke
- 60: Zweite Kupplung
- 61: Zweite Schalthülse
- 62, 63: Zweite Kupplungsgegenstücke

## Patentansprüche

1. Schaltgetriebe (1) mit mindestens zwei Schaltstufen, vorzugsweise zur Verwendung in der Walzwerkstechnik, das aufweist:
eine drehbar gelagerte Antriebswelle (20), an die ein Eingangsdrehmoment anlegbar ist;
eine drehbar gelagerte erste Abtriebswelle (30) und eine drehbar gelagerte zweite Abtriebswelle (40), die parallel angeordnet und über eine Abtriebsgetriebestufe so miteinander verbunden sind, dass sie sich in jeder Schaltstufe des Schaltgetriebes (1) bei einem an die Antriebswelle (20) angelegten Eingangsdrehmoment gegensinnig, vorzugsweise mit derselben Drehzahl, drehen;
eine erste Kupplung (50), wobei
im gekuppelten Zustand der ersten Kupplung (50) eine erste Schaltstufe des Schaltgetriebes (1) realisiert ist, in der die Antriebswelle (20) und die erste Abtriebswelle (30) so miteinander verbunden sind, dass das Eingangsdrehmoment von der Antriebswelle (20) ohne Über- oder Untersetzung, vorzugsweise ohne Umlenkung sowie ohne Stirnradstufe, auf die erste Abtriebswelle (30) übertragen wird,
**dadurch gekennzeichnet, dass** die erste Kupplung eingerichtet ist, um die Antriebswelle und die erste Abtriebswelle auf eine schaltbare Weise miteinander zu verbinden und zu trennen.

2. Schaltgetriebe (1) nach Anspruch 1, **dadurch gekennzeichnet, dass** die Antriebswelle (20) und die erste Abtriebswelle (30) axial hintereinander entlang derselben Drehachse gelagert sind.

3. Schaltgetriebe (1) nach Anspruch 1 oder 2, **dadurch gekennzeichnet, dass** die Abtriebsgetriebestufe eine erste Kammwalze (31), die fest mit der ersten Abtriebswelle (30) verbunden ist, und eine zweite Kammwalze (41) aufweist, die fest mit der zweiten Abtriebswelle (40) verbunden ist und mit der ersten Kammwalze (31) im Zahneingriff steht, wobei die erste Kammwalze (31) und die zweite Kammwalze (41) vorzugsweise denselben Durchmesser aufweisen.

4. Schaltgetriebe (1) nach einem der vorigen Ansprüche, **dadurch gekennzeichnet, dass** die erste Kupplung (50) eine formschlüssige Kupplung ist, die vorzugsweise eine zur ersten Abtriebswelle (30) konzentrisch angeordnete erste Schalthülse (51) aufweist, die zur Schaltung der ersten Kupplung (50) axial verschiebbar ist.

5. Schaltgetriebe (1) nach einem der vorigen Ansprüche, **dadurch gekennzeichnet, dass** dieses eine Antriebsgetriebestufe aufweist, die in einer zweiten Schaltstufe eine Über- oder Untersetzung zwischen der Antriebswelle (20) und der zweiten Abtriebswelle (40) realisiert.

6. Schaltgetriebe (1) nach Anspruch 5, **dadurch gekennzeichnet, dass** die Antriebsgetriebestufe ein erstes Stirnrad (21), das fest mit der Antriebswelle (20) verbunden ist, und ein zweites Stirnrad (42) aufweist, das mit dem ersten Stirnrad (21) im Zahneingriff steht und so mit der zweiten Abtriebswelle (40) verbindbar ist, dass in der zweiten Schaltstufe das Eingangsdrehmoment von der Antriebswelle (20) durch die beiden Stirnräder (21, 42) umgesetzt und auf die zweite Abtriebswelle (40) übertragen wird, wobei der Durchmesser des ersten Stirnrads (21) vorzugsweise kleiner als der des zweiten Stirnrads (42) ist.

7. Schaltgetriebe (1) nach Anspruch 5 oder 6, **dadurch gekennzeichnet, dass** die Antriebsgetriebestufe eine zweite Kupplung (60) aufweist, die eingerichtet ist, um die Antriebswelle (20) und die zweite Abtriebswelle (40), vorzugsweise das zweite Stirnrad (42) und die zweite Abtriebswelle (40), auf eine schaltbare Weise miteinander zu verbinden und zu trennen, wobei im gekuppelten Zustand der zweiten Kupplung (60) die zweite Schaltstufe des Schaltgetriebes (1) realisiert ist.

8. Schaltgetriebe (1) nach Anspruch 7, **dadurch gekennzeichnet, dass** die zweite Kupplung (60) eine formschlüssige Kupplung ist, die vorzugsweise eine zur zweiten Abtriebswelle (40) konzentrisch angeordnete zweite Schalthülse (61) aufweist, die zur Schaltung der zweiten Kupplung (60) axial verschiebbar ist.

9. Schaltgetriebe (1) nach Anspruch 7 oder 8, **dadurch gekennzeichnet, dass** die erste Kupplung (50) und die zweite Kupplung (60) so miteinander gekoppelt sind, dass sie stets gemeinsam und gegensinnig geschaltet werden, vorzugsweise sind die erste Kupplung (50) und die zweite Kupplung (60) mechanische miteinander gekoppelt.

10. Walzwerk zum Walzen eines metallischen Bands, das ein Schaltgetriebe (1) nach einem der vorigen Ansprüche aufweist, wobei die erste Abtriebswelle (30) und die zweite Abtriebswelle (40) jeweils mit einer Arbeits-, Zwischen- oder Stützwalze verbunden sind.

## Claims

1. Shift transmission (1) with at least two shift stages, preferably for use in rolling mill technology, which comprises:
a rotatably mounted drive input shaft (20) to which an input torque can be applied;
a rotatably mounted first drive output shaft (30) and a rotatably mounted second drive output shaft (40), which are arranged in parallel and which are so connected together by way of a drive output transmission stage that they rotate in each shift stage of the shift transmission (1) in opposite sense, preferably at the same rotational speed, when an input torque is applied to the drive input shaft (20);
a first clutch (50), where in the coupled state of the first clutch (50) a first shift stage of the shift transmission (1) is realised in which the drive input shaft (20) and the first drive output shaft (30) are so connected with one another that the input torque is transferred from the drive input shaft (20) to the first drive output shaft (30) without speed step-up or speed step-down, particularly without diversion and without a spur gear stage,
**characterised in that** the first clutch is arranged to connect the drive input shaft and the first drive output shaft together and to separate them in a switchable manner.

2. Shift transmission (1) according to claim 1, **characterised in that** the drive input shaft (20) and the first drive output shaft (30) are mounted axially in succession along the same axis of rotation.

3. Shift transmission (1) according to claim 1 or 2, **characterised in that** the drive output transmission stage comprises a first pinion (31) which is fixedly connected with the first output shaft (30) and a second pinion (41) which is fixedly connected with the second drive output shaft (40) and in mesh with the first pinion (31), wherein the first pinion (31) and the second pinion (41) preferably have the same diameter.

4. Shift transmission (1) according to any one of the preceding claims, **characterised in that** the first clutch (50) is a mechanically positive clutch which preferably comprises a first shift sleeve (51), which is arranged concentrically with respect to the first drive output shaft (30) and which is axially displaceable for shifting the first clutch (50).

5. Shift transmission (1) according to any one of the preceding claims, **characterised in that** this comprises a drive input transmission stage which in a second shift stage realises a speed step-up or speed step-down between the drive input shaft (20) and the second drive output shaft (40).

6. Shift transmission (1) according to claim 5, **characterised in that** the drive input transmission stage comprises a first spur gear (21) which is fixedly connected with the drive input shaft (20) and a second spur gear (42) which is in mesh with the first spur gear (21) and thus so connectible with the second drive output shaft (40) that in the second shift stage the input torque is transferred from the drive input shaft (20) by the two spur gears (21, 42) and transmitted to the second drive output shaft (40), wherein the diameter of the first spur gear (21) is preferably smaller than that of the second spur gear (42).

7. Shift transmission (1) according to claim 5 or 6, **characterised in that** the drive input transmission stage comprises a second clutch (60) which is arranged to connect the drive input shaft (20) and the second drive output shaft (40), preferably the second spur gear (42) and the second drive output shaft (40), together and to separate them in a switchable manner, wherein the second shift stage of the shift transmission (1) is realised in the coupled state of the second clutch (60).

8. Shift transmission (1) according to claim 7, **characterised in that** the second clutch (60) is a mechanically positive clutch which preferably comprises a second shift sleeve (61), which is arranged concentrically with respect to the second drive output shaft (40) and which is axially displaceable for shifting the second clutch (60).

9. Shift transmission (1) according to claim 7 or 8, **characterised in that** the first clutch (50) and the second clutch (60) are so coupled together that they are always shifted in common and in opposite sense, the first clutch (50) and the second clutch (60) preferably being mechanically coupled together.

10. Rolling mill for rolling a metallic strip, which comprises a shift transmission (1) according to any one of the preceding claims, wherein the first drive output shaft (30) and the second drive output shaft (40) are each connected with a respective work roll, intermediate roll or backing roll.

## Revendications

1. Mécanisme de changement de vitesse (1) qui comprend au moins deux étages de commutation, de préférence pour son utilisation dans la technique de laminage, qui présente :
un arbre de transmission (20) monté en rotation, auquel on peut appliquer un couple d'entrée ;
un premier arbre de sortie (30) monté en rotation et un deuxième arbre de sortie (40) monté en rotation, qui sont disposés en parallèle et qui sont reliés l'un à l'autre par l'intermédiaire d'un étage de transmission de sortie, d'une manière telle que, à chaque étage de commutation du mécanisme de changement de vitesse (1), ils sont mis en rotation, dans le contexte d'un couple d'entrée appliqué à l'arbre de transmission (20), dans des sens opposés, de préférence avec la même vitesse de rotation ;
un premier embrayage (50) ;
dans lequel, à l'état accouplé du premier embrayage (50), on réalise un premier étage de commutation du mécanisme de changement de vitesse (1), dans lequel l'arbre de transmission (20) et le premier arbre de sortie (30) sont reliés l'un à l'autre d'une manière telle que le couple d'entrée de l'arbre de transmission (20) est transmis au premier arbre de sortie (30) en l'absence d'une multiplication ou d'une démultiplication, de préférence en l'absence de déviation et en l'absence d'un étage de roue cylindrique à denture droite ;
**caractérisé en ce que** le premier embrayage est conçu pour relier l'un à l'autre l'arbre de transmission et le premier arbre de sortie et pour les séparer l'un de l'autre, d'une manière commutable.

2. Mécanisme de changement de vitesse (1) selon la revendication 1, **caractérisé en ce que** l'arbre de transmission (20) et le premier arbre de sortie (30) sont montés l'un derrière l'autre en direction axiale le long du même axe de rotation.

3. Mécanisme de changement de vitesse (1) selon la revendication 1 ou 2, **caractérisé en ce que** l'étage de sortie présente un premier pignon de laminoir (31) qui est relié à demeure au premier arbre de sortie (30) et un deuxième pignon de laminoir (41) qui est relié à demeure au deuxième arbre de sortie (40) et qui vient s'engrener avec le premier pignon de laminoir (31) ; dans lequel le premier pignon de laminoir (31) et le deuxième pignon de laminoir (41) présentent de préférence le même diamètre.

4. Mécanisme de changement de vitesse (1) selon l'une quelconque des revendications précédentes, **caractérisé en ce que** le premier embrayage (50) représente un embrayage du type à complémentarité de forme qui présente de préférence une première douille de commutation (51) qui est disposée en position concentrique par rapport au premier arbre de sortie (30), qui est mobile en direction axiale à des fins de commutation du premier embrayage (50).

5. Mécanisme de changement de vitesse (1) selon l'une quelconque des revendications précédentes, **caractérisé en ce que** le mécanisme en question présente un étage de transmission d'entraînement qui réalise, dans un deuxième étage de commutation, une multiplication ou une démultiplication entre l'arbre de transmission (20) et le deuxième arbre de sortie (40).

6. Mécanisme de changement de vitesse (1) selon la revendication 5, **caractérisé en ce que** l'étage de transmission d'entraînement présente une première roue cylindrique à denture droite (21) qui est reliée à demeure à l'arbre de transmission (20) ainsi qu'une deuxième roue cylindrique à denture droite (42) qui vient s'engrener avec la première roue cylindrique à denture droite (21) et qui peut ainsi être reliée au deuxième arbre de sortie (40) d'une manière telle que, dans le deuxième étage de commutation, le couple d'entrée de l'arbre de transmission (20) est soumis à une conversion par l'intermédiaire des deux roues cylindriques à denture droite (21, 42) et est transmis au deuxième arbre de sortie (40) ; dans lequel le diamètre de la première roue cylindrique à denture droite (21) est de préférence inférieur à celui de la deuxième roue cylindrique à denture droite (42).

7. Mécanisme de changement de vitesse (1) selon la revendication 5 ou 6, **caractérisé en ce que** l'étage de transmission d'entraînement présente un deuxième embrayage (60) qui est conçu pour relier l'un à l'autre et pour séparer l'un de l'autre l'arbre de transmission (20) et le deuxième arbre de sortie (40), de préférence la deuxième roue cylindrique à denture droite (42) et le deuxième arbre de sortie (40), d'une manière commutable; dans lequel, à l'état accouplé du deuxième embrayage (60), on réalise le deuxième étage de commutation du mécanisme de changement de vitesse (1).

8. Mécanisme de changement de vitesse (1) selon la revendication 7, **caractérisé en ce que** le deuxième embrayage (60) représente un embrayage du type à complémentarité de forme qui présente de préférence une deuxième douille de commutation (61) qui est disposée en position concentrique par rapport au deuxième arbre de sortie (40), qui est mobile en direction axiale à des fins de commutation du deuxième embrayage (60).

9. Mécanisme de changement de vitesse (1) selon la revendication 7 ou 8, **caractérisé en ce que** le premier embrayage (50) et le deuxième embrayage (60) sont accouplés l'un à l'autre d'une manière telle qu'ils sont soumis à une commutation toujours de manière conjointe et dans des sens opposés ; de préférence, le premier embrayage (50) et le deuxième embrayage (60) sont accouplés l'un à l'autre par voie mécanique.

10. Laminoir destiné au laminage d'une bande métallique, qui présente un mécanisme de changement de vitesse (1) selon l'une quelconque des revendications précédentes ; dans lequel le premier arbre de sortie (30) et le deuxième arbre de sortie (40) sont reliés respectivement à un cylindre de travail, à un cylindre intermédiaire ou à un cylindre de support.
